# EUROPEAN PATENT SPECIFICATION

(11) **EP 3 668 059 B1**
(45) Date of publication and mention of the grant of the patent: **08.12.2021**
(21) Application number: 19204280.2
(22) Date of filing: 22.02.2013
(51) Int. Cl.: H04L 29/08, G06F 16/957

(54) **MOBILE TERMINAL AND METHOD FOR PROCESSING CLOUD DATA**
MOBILES ENDGERÄT UND VERFAHREN ZUR VERARBEITUNG VON CLOUD-DATEN
TERMINAL MOBILE ET PROCÉDÉ DE TRAITEMENT DE DONNÉES DE NUAGE

(30) Priority: 24.02.2012 KR 20120019307
(43) Date of publication of application: 17.06.2020
(62) Divisional of application: 13156336.3
(73) Proprietor: Samsung Electronics Co., Ltd., Gyeonggi-do 16677 (KR)
(72) Inventor: LIM, Wansoo, 16677 Suwon-si, (KR); KIM, Dohyoung, 16677 Suwon-si, (KR); KIM, Minkyung, 16677 Suwon-si, (KR); KIM, Youngmi, 16677 Suwon-si, (KR)
(74) Representative: HGF

(56) References cited:
- US-A1- 2008 317 068
- US-A1- 2010 159 909
- US-A1- 2010 198 944
- US-A1- 2011 256 846

## Description

### BACKGROUND OF THE INVENTION

### Field of the Invention:

The present invention relates to a mobile terminal and a method for processing cloud data within a mobile terminal. More particularly, the present invention relates to a mobile terminal and a method for automatically operating upon downloaded data using a function which is selected at a mobile terminal.

### Description of the Related Art:

Generally, a terminal such as a mobile terminal according to the related art refers to a device for performing a function while a user carries the device. A mobile terminal may comprise a device such as a mobile phone, a tablet Personal Computer (PC), a notebook computer, an MP3 player, and the like. Such a mobile terminal may perform various functions such as communication, photographing, Internet, video replay, broadcast reception, and the like. However, design of such a mobile terminal according to the related art emphasizes portability. Thus, mobile terminals according to the related art are limited in the capacity of the memory in which data is stored. Hence, in order to overcome such a limited memory capacity, various efforts and methods are being considered. One such method is making use of a cloud service.

A cloud service refers to a service in which content such as a movie, a picture, music, a document, a media file, an address list, and the like is stored in a server, and the content may be downloaded and used in a terminal such as a mobile terminal. The mobile terminal may retrieve specific data stored in the cloud server using a cloud service and may operate upon the data using a specific function of the mobile terminal. However, if a user intends to operate upon specific data stored in the cloud server using a specific function of the mobile terminal, the data must first be downloaded before the data may be operated upon using the function. For example, according to the related art, in order to apply a user experience such as a function setting of a mobile terminal to a file within the cloud, the file should be manually downloaded and then the user experience should be applied.

Therefore, a need exists for a system and method for automatically operating upon data downloaded from a server using a function if a specific function is selected and cloud data is selected in a mobile terminal which shares data with the server.

The above information is presented as background information only to assist with understanding the present disclosure. No determination has been made, and no assertion is made, as to whether any of the above might be applicable as prior art with regard to the present invention.

US 2011/256846 A1 discloses components of a mobile traffic network and components in communication with the network cooperate to confirm whether a mobile station user or account owner has previously purchased media content for a particular mobile station. Media content that has already been purchased by a user can be downloaded by that user to a new mobile station after the initial mobile station is lost, damaged, or upgraded.

US 2008/317068 A1 discloses systems and methods for synchronizing data between endpoints using elements of centralized and decentralized synchronization systems and communication topologies. Such systems and methods may in some cases synchronize some subset of data with a centralized endpoint while another subset of data is synchronized in a decentralized fashion directly with other endpoints. Such systems and methods may include a variety of cooperative functionality to assist in the synchronization of data between endpoints.

US 2010/159909 A1 discloses a dynamically created and automatically updated personalized cloud of mobile tasks may be displayed on an interactive visual display via a personalized cloud generator application. The personalized cloud generator application may receive and/or capture information representing a mobile task performed by a mobile computing device user. The personalized cloud generator application may then store the information and determine a relevance of a given performed mobile task. If the relevance of the performed mobile task meets a prescribed threshold, the personal cloud generator application may display a selectable visual representation (e.g., selectable icon) of the performed mobile task. Given a user's activity, the visual representation may be automatically updated (displayed, removed, moved, resized, etc.) based on the information received and/or captured. Subsequent selection of the displayed visual representation allows quick and easy access or performance of the associated mobile task.

US 2010/198944 A1 discloses a system for synchronizing digital content stored on a user's mobile handset with digital content stored on the user's personal computer.

### SUMMARY OF THE INVENTION

It is an aim of certain embodiments of the present invention to address at least some of the above-mentioned problems and/or disadvantages and to provide at least some of the advantages described below. Accordingly, an aim of certain embodiments of the present invention is to provide a method and apparatus for automatically operating upon cloud data downloaded from a server using a corresponding function if a specific function is selected in a mobile terminal which shares data with the server. To this end, according to an exemplary embodiment of the present invention the mobile terminal automatically downloads the cloud data and operates upon the cloud data using the function.

In accordance with a first aspect of the present invention there is provided a method of processing cloud data within a mobile terminal, the method comprising: processing meta information corresponding to cloud data; receiving a selection of a function corresponding to the meta information from a function menu; downloading cloud data corresponding to the meta information; and operating upon the downloaded cloud data using the selected function.

In accordance with a second aspect of the present invention there is provided a mobile terminal for processing cloud data, the mobile terminal comprising: a communication unit arranged to communicate with a server storing cloud data; a controller arranged to: process meta information corresponding to cloud data; receive a selection of a function corresponding to the meta information from a function menu; download cloud data corresponding to the meta information through the communication unit; and operate upon the downloaded cloud data using the selected function.

Another aspect of the invention provides a computer program comprising instructions arranged, when executed, to implement a method and/or apparatus in accordance with any one of the above-described aspects. A further aspect provides machine-readable storage storing such a program.

According to exemplary embodiments of the present invention, in a state in which meta information corresponding to cloud data is processed, if a specific function (for instance, setting a wallpaper, tone, etc.) of the mobile terminal is selected, the mobile terminal automatically downloads the corresponding actual cloud data, which is being displayed, and operates upon the data using the function. Further, in certain embodiments, if cloud data is selected in a state in which communication is performed, the mobile terminal may download automatically selected cloud data, add the data to a communication function and transmit the added data. Hence, according to a cloud service method of exemplary embodiments of the present invention, cloud data may be set as data of the function without performing several operations. For example, the procedure may be performed by promptly downloading a cloud file from a server within the current application without perform a dedicated application for the downloading of the file within the cloud in a mobile terminal.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 illustrates a configuration of a cloud service system according to an exemplary embodiment of the present invention;
FIG. 2 illustrates a configuration of a mobile terminal according to an exemplary embodiment of the present invention;
FIG. 3 is a flowchart illustrating a procedure in which a mobile terminal downloads cloud data when a specific function is selected, and automatically operates upon downloaded cloud data using the function according to an exemplary embodiment of the present invention;
FIG. 4 is a flowchart illustrating a procedure for automatically operating upon downloaded cloud data to set the cloud data as a background screen according to an exemplary embodiment of the present invention;
FIG. 5 illustrates an example of setting a background screen using downloaded cloud data using the procedure illustrated in FIG. 4 according to an exemplary embodiment of the present invention;
FIG. 6 is a flowchart illustrating a procedure for automatically downloading cloud data and setting the cloud data as a specific tone of a mobile terminal according to an exemplary embodiment of the present invention;
FIG. 7 is a flowchart illustrating a procedure for automatically downloading and transmitting cloud data during communication according to an exemplary embodiment of the present invention; and
FIG. 8 illustrates an example of adding a cloud image to an e-mail and transmitting the e-mail using the procedure illustrated in FIG. 7 according to an exemplary embodiment of the present invention.
Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims. It includes various specific details to assist in that understanding but these are to be regarded as merely exemplary. Accordingly, those of ordinary skill in the art will recognize that various changes and modifications of the embodiments described herein can be made without departing from the scope of the invention as defined by the appended claims. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims.

It is to be understood that the singular forms "a," "an," and "the" include plural referents unless the context clearly dictates otherwise. Thus, for example, reference to "a component surface" includes reference to one or more of such surfaces.

Throughout the description and claims of this specification, the words "comprise" and "contain" and variations of the words, for example "comprising" and "comprises", means "including but not limited to", and is not intended to (and does not) exclude other components, integers or steps.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

According to exemplary embodiments of the present invention, when processing cloud data in a mobile terminal which is synchronised with a server, if meta information corresponding to cloud data is selected so as to be operated upon using a specific function, the corresponding data is downloaded from the server. For example, when the file (e.g., selected cloud data) within the cloud server is intended to be set as wallpaper or a tone (e.g., a ring tone) indicating a specific function of a mobile terminal, if the file is downloaded after selecting the file and a desired function, the mobile terminal automatically sets the downloaded file according to the function.

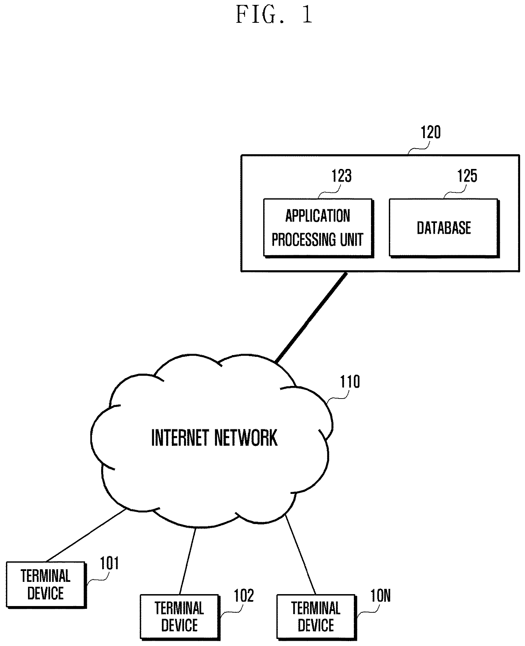

FIG. 1 illustrates a configuration of a cloud service system according to an exemplary embodiment of the present invention.

Referring to FIG. 1, mobile terminals 101 to 10N are connected to a server 120 through Internet network 110. As an example, each mobile terminal 101 to 10N may be a mobile phone, a tablet Personal Computer (PC), a notebook computer, an MP3 player, and the like. Further, the mobile terminals 101 to 10N maintain are arranged to synchronise meta information sets stored within each mobile terminal 101 to 10N with the server 120. The server 120 includes an application processing unit 123 for processing various content, and a database 125 for storing meta information and actual data corresponding thereto.

Cloud service systems are evolving such that some cloud service systems now provide platform services. For example, a conventional personal cloud service system may comprise a service which only provides remote storage space for mobile terminals. However, more recent cloud service systems have upgraded functionality to provide platform services which allow mobile terminals to use various applications such as software available within the cloud service system. To this end, a cloud service system may provide various application services through cooperation between a communication company and an application service provider. For example, a client may freely edit a document using a terminal such as a smart phone, a tablet PC, and the like, as well as a PC in a company or at home, without installing a document editing software program on that terminal. Specifically, if an application for editing a document is downloaded to a terminal, a software program, which has been used on a first PC, may also be used on a terminal such as another PC, an Android or iOS based mobile terminal, a tablet PC, a notebook computer, and the like without requiring the software program to be downloaded onto that terminal. Further, such applications are being diversified to allow a broad range of media such as movies, games, documentaries, music, pictures, and the like to be processed using a cloud service.

Further, in a Digital Living Network Alliance (DLNA) based service, in which wired and wireless parts have been integrated, content may be freely transmitted and shared through a home network. For example, content stored in the cloud may be utilized through various devices at home, which are connected in a wired or wireless manner.

A mobile terminal according to an exemplary embodiment of the present invention may include a communication unit for communicating with a server which stores cloud data through an Internet network, a memory for storing cloud data, a display unit for displaying cloud data, and a controller for displaying the cloud data in the display unit, for requesting download of the cloud data through the communication unit when a specific function is selected from a function menu in a state in which the cloud data is displayed, for storing the downloaded cloud data, and for automatically operating upon the cloud data using the selection function.

As an example, in a state in which a communication function is performed through a communication unit, when selecting cloud data, the controller may request the download of selected cloud data, and add the downloaded cloud data to the communication function so as to be automatically transmitted.

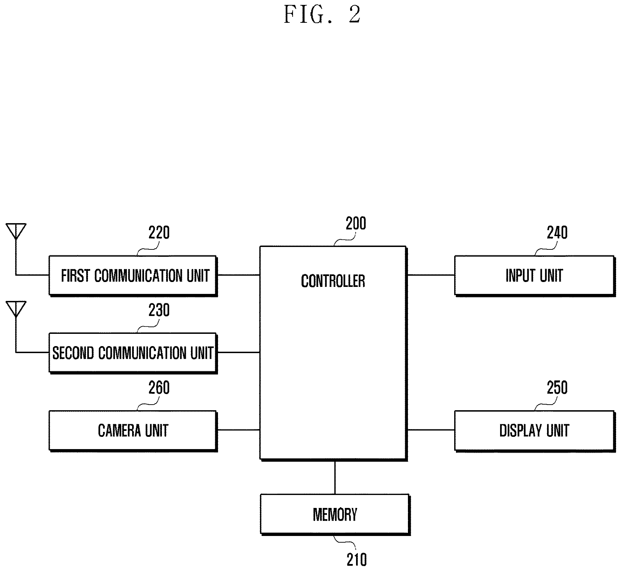

FIG. 2 illustrates a configuration of a mobile terminal according to an exemplary embodiment of the present invention.

Referring to FIG. 2, the mobile terminal may be, for example, any of mobile terminals 101 to 10N illustrated in FIG. 1. According to exemplary embodiments of the present invention, it is assumed that the mobile terminal is a mobile phone. The mobile terminal includes a controller 200, a memory 210, a first communication unit 220, a second communication unit 230, an input unit 240, a display unit 250, and a camera unit 260.

The first communication unit 220 and the second communication unit 230 wirelessly connect the mobile terminal to corresponding communication networks. Each communication network may be a base station communication network, Internet communication network, or the like. The communication units 220 and 230 may respectively include a transmission unit comprising a frequency up-converter, which up-converts a transmission signal to an RF band, a power amplifier, a low-noise amplifier which low-noise-amplifies an RF reception signal, and a frequency down-converter which low-converts the RF signal to a bottom band. The communication units 220 and 230 may respectively include a modulation unit which modulates the transmission signal and which transmits the modulated signal to the transmission unit, and a demodulation unit which demodulates the signal outputted from the reception unit. The modulation and demodulation units may be 3rd Generation (3G) modulation and demodulation units such as Wideband Code Division Multiple Access (WCDMA), Code Division Multiple Access (CDMA), and the like, or 4th Generation (4G) modulation and demodulation units such as, for example, Long Term Evolution (LTE), and the like. Further, the modulation and demodulation units may also be Wi-Fi, Wireless Broadband (WiBro), Worldwide Interoperability for Microwave Access (WiMAX), and the like.

The controller 200 controls the overall operation of the mobile terminal, and is connected to the communication network and provides a cloud data communication service through the first communication unit 220 and the second communication unit 230 when data communication is performed, according to an exemplary embodiment of the present invention.

The memory 210 may include a program memory for storing a mobile terminal operating system and other programs and a data memory for storing installation data and data generated during performance of a program. Further, according to an exemplary embodiment of the present invention, the memory 210 stores downloaded cloud data. Cloud data, for which a specific function is selected is downloaded and stored as data to be operated upon by the function under the control of the controller 200.

The input unit 240 performs a function for inputting a command for controlling operation of the mobile terminal and controlling the use of data. The display unit 250 performs a function of displaying display data under the control of the controller 200. The input unit 240 and the display unit 250 may be configured as an integrated touch screen panel. The camera unit 260 takes a picture, and when necessary, the camera unit 260 may upload a picture to a server under the control of the controller 200.

The first communication unit 220 and/or the second communication unit 230 may be wirelessly connected to each base station and may perform a voice and/or data communication function, or may be connected to an Internet network and may perform data communication. A communication unit, which is connected to the base station, may include a modulation and demodulation unit of a 3G or 4G type and may perform a voice and/or data communication service, and the communication unit, which is connected to the Internet network, may be connected to an Internet server, and the like, and may perform a data communication service function. In the description below, the first communication unit 220 is a communication unit which is wirelessly connected to an Internet network 110, and may be a communication unit including a modem such as Wi-Fi, WiBro, WiMAX type, and the like. The second communication unit 230 may be connected to a base station, and may be a communication unit including a modem for a voice and data communication, such as a GSM, CDMA, WCDMA, LTE type, and the like. The second communication unit 230 may also be connected to the Internet network 110 through the base station. Further, it is assumed in FIG. 2 that there are 2 communication units. However, exemplary embodiments of the present invention may include a plurality of base stations (e.g., base stations using a GSM, WCDMA, LTE type, and the like) and a plurality of communication units. Exemplary embodiments of the present invention may include three or more communication units.

A mobile terminal having the above configuration may work as a client of server 120. According to exemplary embodiments of the present invention, menu structures of cloud data at the server 120 and at the mobile terminal are synchronised. Further, the server 120 stores meta information synchronised with the mobile terminal through a menu structure, and actual data corresponding to the meta information. In contrast, the mobile terminal may with store only meta information or the mobile terminal may store meta information and actual data corresponding to the meta information.

A mobile terminal having the configuration of FIG. 2 displays and processes actual data stored in the server using meta information synchronised with the server, which may be at the time of cloud data synchronisation. To this end, the mobile terminal provides a function of operating according to meta information (meta only "on/off") selected in a Settings menu (a meta-dedicated mode). The meta-dedicated mode (meta only "on") allows meta information to be synchronised between the mobile terminal and the server whenever a cloud data synchronisation method is enacted at the mobile terminal. If specific meta information is selected in the meta-dedicated mode, the mobile terminal downloads actual data corresponding to the meta information from the server, and stores the downloaded data in a cache area of the mobile terminal. The downloaded data may either be immediately executed or executed from the cache area. If the execution of the meta-dedicated mode is terminated, the cache area is reformatted, and a space for executing another file is prepared. In a device without a dedicated device cache area, a space within an external memory card may be temporarily utilized for a space for execution.

If a meta-sharing mode (meta only "off') is selected, cloud data synchronisation methods enacted at the mobile terminal synchronise meta information and actual data between the mobile terminal and the server. In such a case, the mobile terminal synchronises all meta information of the cloud server 120 and then actual data as long as allowed by the memory 210 (until the memory 210 is filled or reaches a predetermined maximum storage). This process may be viewed as converting meta information into actual data at the mobile terminal, although it will be appreciated that in practice the meta information and the actual data may both be retained at the mobile terminal.

The mobile terminal may provide a cloud synchronisation setting menu for setting the meta-dedicated mode or the meta-sharing mode for different types of data which may be synchronised between a mobile terminal and a cloud service. If the setting menu is selected through the input unit 240, the controller 200 displays the selection on the display unit 250. An example of a cloud synchronisation setting menu is shown in Table 1 below.

**Table 1**

| data type | meta only? |
|---|---|
| | |
| photo | on/off |
| music | on/off |
| video | on/off |
| document | on/off |
| - | - |
| - | - |
| - | - |

Music, video, photo, document, and the like are types of data which may be synchronised between a mobile device and a cloud service. Further data types may be added. If the meta only option is set to "on" (the meta dedicated mode) then meta information for that type of data is synchronised between the mobile terminal and the server 120. If the meta only option is set to "off' (the meta-sharing mode) then meta information and actual data for that type of data are synchronised between the mobile terminal and the server 120.

Likewise, in a state in which the mobile terminal is synchronised with the server 120, if a specific function is selected for meta data corresponding to cloud data, the controller 200 of the mobile terminal requests transmission of the selected cloud data to the server 120, and automatically operates upon the data downloaded from the server 120 using the selected function of the mobile terminal.

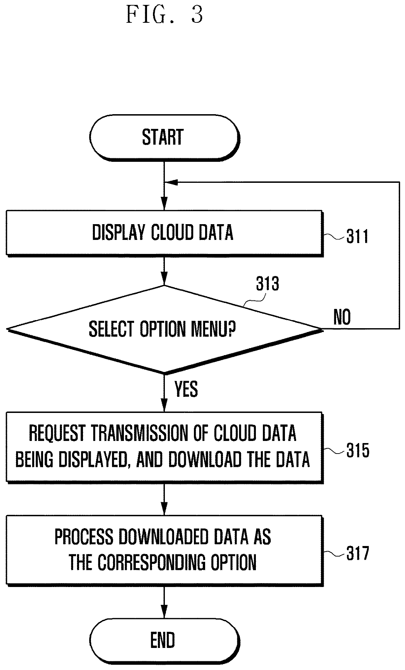

FIG. 3 is a flowchart illustrating a procedure in which a mobile terminal downloads actual cloud data when a specific function is selected, and automatically operates on the cloud data using the function according to an exemplary embodiment of the present invention.

Referring to FIG. 3, the controller 200 displays meta information corresponding to cloud data through the display unit 250 in step 311. If the user selects a function option menu for setting a specific function in connection with displayed meta information, the controller 200 detects the selection and displays the selected option menu in step 313, thereby enabling the user to analyse the selected option menu. Thereafter, the controller 220 sends a request for transmission of actual data corresponding to the displayed meta information to the server 120, and receives the actual data from the server in step 315. In step 317, the controller 220 stores the downloaded data actual as data associated with the function in the memory 210 and automatically applies the function to the downloaded data.

The method of processing data within a mobile terminal according to an exemplary embodiment of the present invention may include a process of processing cloud data, a process of requesting a download of the cloud data when selecting a function from a function menu when processing the cloud data (such as displaying meta information corresponding to the cloud data, and/or a process of automatically applying the selected function to the downloaded cloud data.

The cloud data may be an image, the function menu may be a screen selection menu, such as a screen selection menu allowing the selection of a home screen, a lock screen, a contact number icon, a lock and home screen, and the like. For example, the screen selection menu may set an image as a background screen (e.g., wallpaper) or a contact number icon. In the description below, it is assumed that the screen selection menu is a wallpaper menu.

Further, if the cloud data is a music file, the function menu may comprise a tone selection menu allowing the selection of a call ring, a message ring, a message ring, an SNS ring, an alarm ring, and the like such that a downloaded music file may be set as the selected tone.

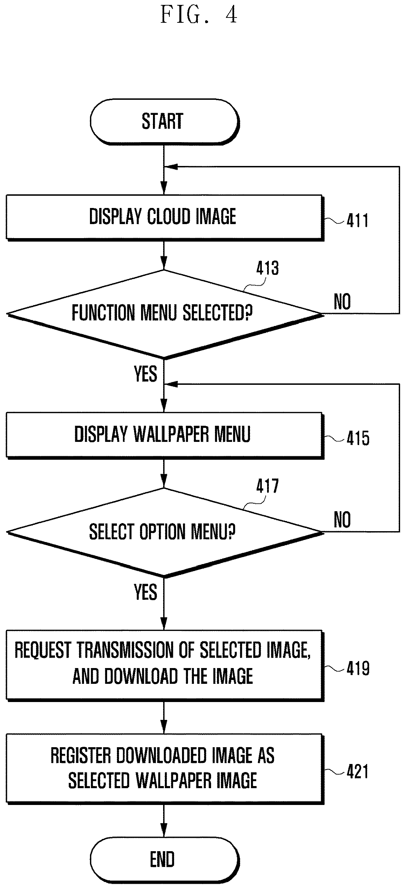

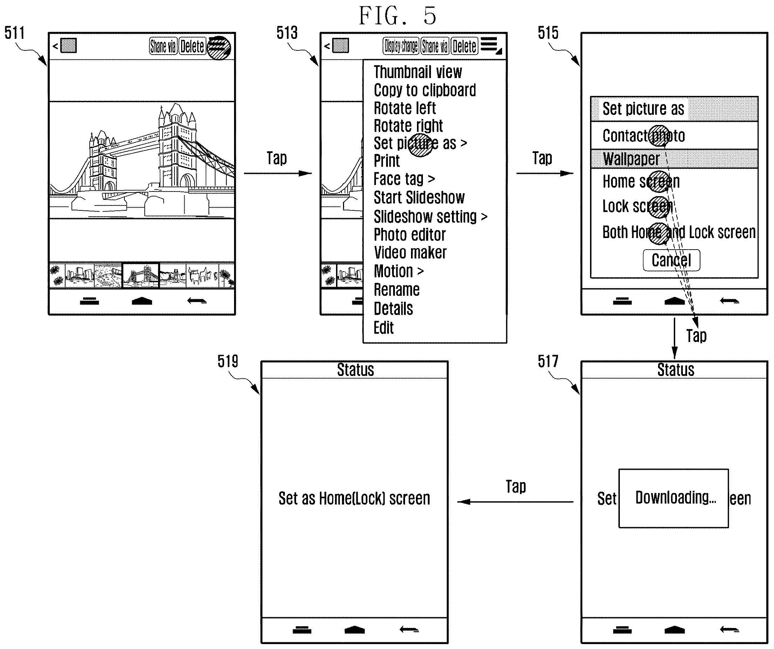

FIG. 4 is a flowchart illustrating a procedure for automatically setting cloud data as a background screen as an example of applying a function of a mobile terminal to downloaded cloud data according to an exemplary embodiment of the present invention. FIG. 5 illustrates an example of setting a background screen such as, for example, the procedure illustrated in FIG. 4 according to an exemplary embodiment of the present invention.

Referring to FIGs. 4 and 5, the controller 200 displays a cloud image or meta information corresponding to the cloud image in step 411. The cloud image is an image stored in the server 120, and may be one image, a plurality of images, or moving pictures. Further, the mobile terminal may download and display an image stored in the server 210 when necessary. In the above state, a user may select a function menu in step 413. The function menu may include an option to set the image as the background screen (wallpaper) of the mobile terminal. If the function menu is selected, the controller 200 displays the function menu. For example, the controller 200 determines whether a user selects a function menu. Further, if a menu option for setting the wallpaper is selected in the displayed function menu, the controller 200 displays types of the set wallpapers in the selected function in step 415. For example, the controller displays the wallpaper menu.

For example, as illustrated in reference numeral 511 of FIG. 5, in a state in which the cloud image, or meta information corresponding to the cloud image, is displayed, if a user selects a function menu, a function menu is displayed as shown in reference numeral 513. As shown in reference numeral 513, in a state in which the function menu is displayed, if user selects a menu option "set pictures as" for setting image as a wallpaper, the controller 200 detects the selection in step 413, and displays types of wallpaper within a "set pictures as" menu as in reference numeral 515. Some examples of the types of the wallpaper include a "home screen", a "lock screen", "both home and lock screen", and the like as shown in reference numeral 515.

In a state in which the types of the wallpaper are displayed as described above, if a specific wallpaper type is selected through the input unit 240 as shown in FIG. 5, the controller 200 detects the selection in step 417. If the controller 220 detects that a selection is made in step 417, the controller 220 requests transmission of an image being displayed to the server 120 in step 419, and downloads an image transmitted from the server 120 as illustrated in reference numeral 517. In contrast, if the controller 220 determines that a selection is not made in step 417, the controller 220 returns to step 415. The controller 220 automatically stores a downloaded image in the storage area of the memory 210 as illustrated in reference numeral 519, and thereafter displays the image through the display unit 250 as a wallpaper when the selected screen is displayed in step 421. For example, in step 421, the controller 220 registers the downloaded image as the selected wallpaper image.

As described above, in the exemplary embodiment of the present invention, if a function (such as "set pictures as") is selected from a function menu in a state in which the cloud image is displayed, the controller 200 may automatically register the image being displayed as the wallpaper.

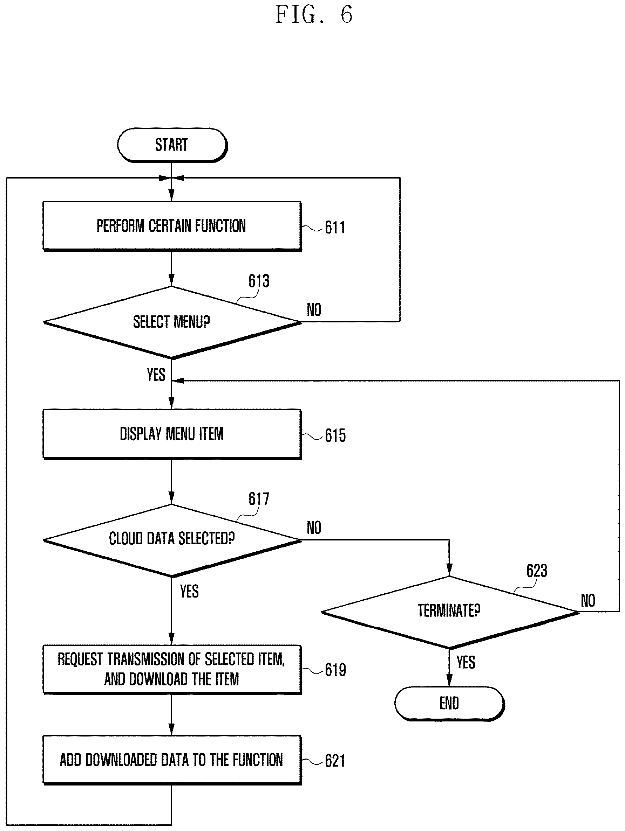

FIG. 6 is a flowchart illustrating a procedure for automatically setting cloud data as a specific tone of a mobile terminal as an example of applying a function of a mobile terminal to downloaded cloud data according to an exemplary embodiment of the present invention.

Referring to FIG. 6, the controller 200 displays meta information or replays a music file of the cloud music file in step 611. The cloud music file is a music file stored in the server 120, and the mobile terminal may request transmission of a music file to the server 120 using meta information when necessary and download and replay the music file stored in the server 120. Likewise, in a state in which the meta information of the music file is displayed or a specific music file is replayed, the user may select a function from a function menu, such as displaying a further function menu for setting the music file corresponding to the displayed meta information or the replayed music file as a certain tone of the mobile terminal.

In step 613, the controller 200 displays the types of the function menus and the controller 200 detects a selection and determines whether a tone setting menu is selected. For example, if the user selects the tone setting menu, the controller 200 detects the selection in step 613, and displays types of tones which may be set in the tone setting menu in step 615. The types of the tones may include a calling ring tone, a message ring tone, a message ring tone, a messenger ring tone, an SNS ring tone, an alarm ring tone, and the like.

Likewise, in a state in which tone types are displayed, the controller 200 detects a selection and determines whether a specific tone is selected through the input unit 240 in step 617. If the controller 200 determines that a specific tone is not selected, the controller 200 proceeds to step 623 in which the controller 200 prompts the user for confirmation as to whether to terminate the process. If the controller 200 receives confirmation that the process is to be terminated, the controller 200 ends the process. Otherwise, if the controller 200 does not receive confirmation to terminate the process, the controller 200 returns to step 615. If the controller 200 determines that a specific tone is selected in step 617, then the controller 200 requests transmission of the selected music file to the server 120 and downloads the music file transmitted from the server in step 619. Further, the controller 200 automatically stores the downloaded music file in connection with the selected tone in step 621. Thereafter, if a call of the communication is received or an alarm is generated, the ring tone of the corresponding communication mode or the warning sound of the set alarm is replayed by replaying the registered music file.

Further, the method of processing data of the mobile terminal according to an exemplary embodiment of the present invention may include a process of performing a communication function, a process of requesting a download of selected cloud data, and a process of adding the downloaded cloud data to the communication function and automatically transmitting the data.

Here, the function menu may become a cloud data menu including a photo, video file and audio file, and the communication function may be one of a voice communication, data communication, text message communication, SNS and e-mail.

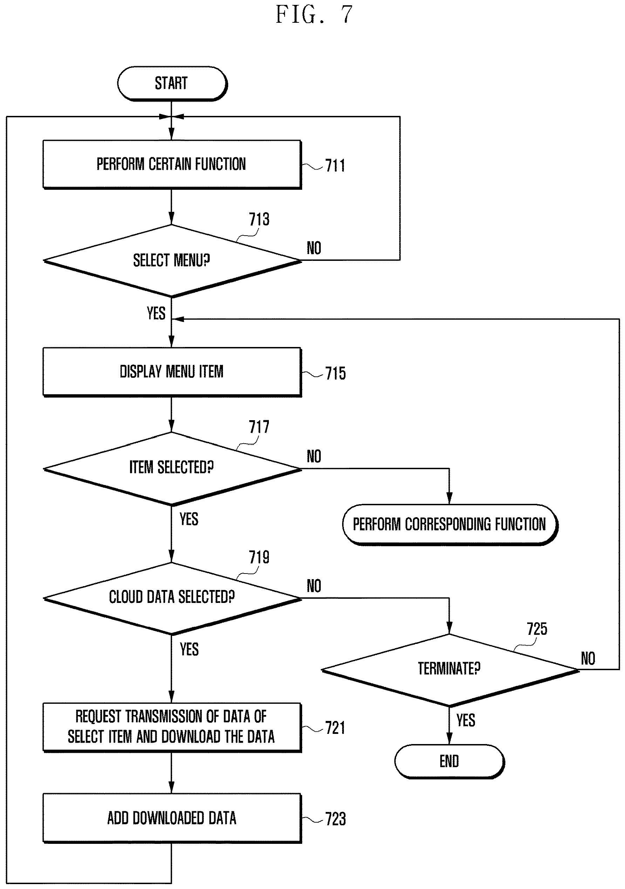

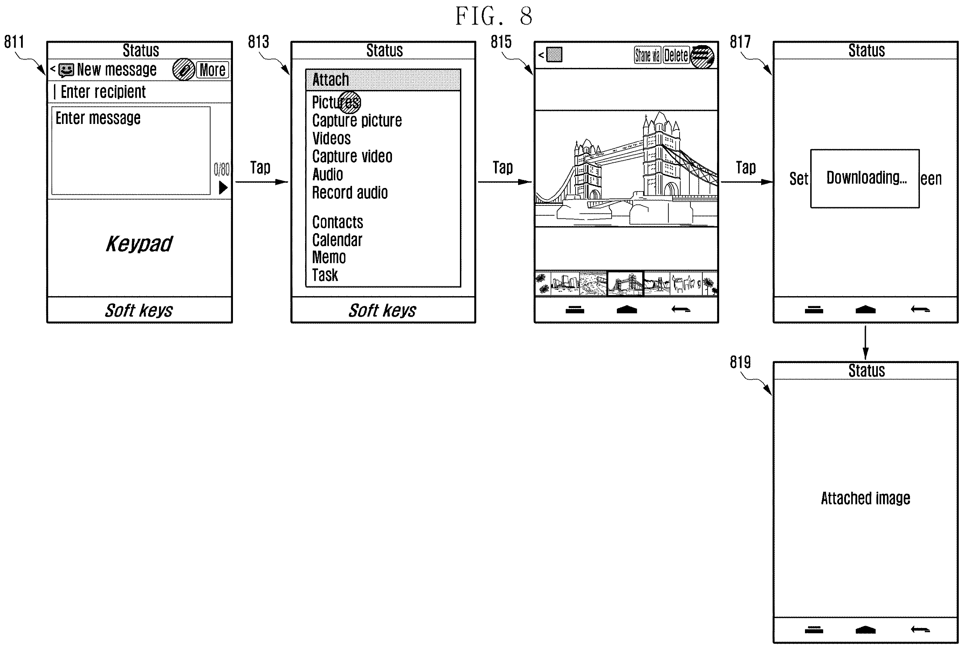

FIG. 7 is a flowchart illustrating a procedure for automatically adding and transmitting cloud data during communication as an example of applying a function of a mobile terminal to cloud data according to an exemplary embodiment of the present invention. FIG. 8 illustrates an example of adding a cloud image to an e-mail and transmitting the e-mail during an operation such as, for example, the operation of FIG. 7 according to an exemplary embodiment of the present invention.

Referring to FIGs. 7 and 8, the controller 200 performs a communication function in step 711. The communication may include various communications such as a voice call, data communication, e-mail, messenger, SNS and text message communication, and the like. As an example, it is assumed that communication is performed using a text message as illustrated in reference numeral 811 of FIG. 8.

In a state in which the above communication is performed, if a function menu is selected, the controller 200 detects the selection in step 713, and displays a function menu as illustrated in reference numeral 813 of FIG. 8 in step 715. The function menu includes menu options such as pictures, video files, audio files, and the like, and if a certain option is selected from the above function menus, the menu option is displayed at step 715. As an example, if "Pictures" is selected from the menu, the controller 200 displays a photo menu as illustrated in reference numeral 815 of FIG. 8 at step 715. At this time, when displaying the picture menu, meta information corresponding to images may be displayed, or the images may be displayed. In a state in which a picture menu is displayed as described above, if a certain image or meta information of an is selected, the controller 200 detects selection of an image in step 717. If the controller 200 does not detect selection of an image, the controller 200 proceeds to perform a corresponding function. In contrast, if the controller 200 does detect selection of an image in step 717, the controller 200 proceeds to step 719 in which the controller 200 determines whether the image is cloud data. At this time, if the data is cloud data, the controller 200 detects the data at step 719, and the controller 200 requests transmission of the image from the server 120 in step 721, and downloads the image transmitted from the server 120 as illustrated in reference numeral 817 of FIG. 8. Thereafter, the controller 200 adds the downloaded image, and transmits the image to the recipient of the communication as illustrated in reference numeral 819 in step 723. Otherwise, if the controller 200 determines that the image is not cloud data in step 719, then the controller 200 proceeds to step 725 in which the controller 200 prompts the user for confirmation as to whether to terminate the process. If the controller 200 receives confirmation that the process is to be terminated, the controller 200 ends the process. In contrast, if the controller 200 does not receive confirmation to terminate the process, the controller 200 returns to step 715.

FIGs. 7 and 8 illustrate a procedure of downloading an image and automatically adding the downloaded image to a message and transmitting the message during text message communication according to an exemplary embodiment of the present invention. However, communication may be applied to other communications (a voice call, data communication, e-mail, SNS, and the like) in addition to a text message communication in the same manner, and the added cloud data may be a video or audio file in addition to the picture image. Further, a plurality of data sets (e.g., a picture and video, video and audio, and/or picture and audio) may also be added.

Likewise, according to an exemplary embodiment of the present invention, in a state in which cloud data is displayed and/or processed, if a specific function (wallpaper, tone, and the like) of the mobile terminal is selected, the mobile terminal may automatically download cloud data, which is being displayed or processed, and apply the function to the data. Further, in a state in which communication is performed, if cloud data is selected, the mobile terminal may download selected cloud data, add the downloaded data to the communication function, and transmit the downloaded data. Hence, the cloud service method according to an exemplary embodiment of the present invention may apply a function to cloud data within a single operation. For example, the procedure may be performed by downloading cloud data within a current application without performing a dedicated application for the downloading of the cloud data.

It will be appreciated that embodiments of the present invention can be realised in the form of hardware, software or a combination of hardware and software. Any such software may be stored in the form of volatile or non-volatile storage, for example a storage device like a ROM, whether erasable or rewritable or not, or in the form of memory, for example RAM, memory chips, device or integrated circuits or on an optically or magnetically readable medium, for example a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

While the present invention has been shown and described with reference to certain exemplary embodiments thereof, it will be understood by those skilled in the art that various changes in form and details may be made therein without departing from the scope of the present invention as defined by the appended claims.

## Claims

1. A mobile terminal (101) comprising:
a display (250);
a communication unit (220, 230) configured to communicate with a server (120) storing an image;
a processor (200) configured to:
control to display, on the display (250), meta information corresponding to the image stored in the server (120);
receive a user selection of a wallpaper setting function corresponding to the meta information; and
based on the user selection of the wallpaper setting function:
download the image from the server through the communication unit (220, 230); and
set the downloaded image as a wallpaper according to the selected wallpaper setting function.

2. The mobile terminal (101) of claim 1, wherein the wallpaper setting function comprises a function of setting the downloaded image as a home screen of the mobile terminal (101), a function of setting the downloaded image as a lock screen of the mobile terminal (101), and a function of setting the downloaded image as the home screen and the lock screen.

3. A method of processing data within a mobile terminal, the method comprising:
displaying (411), on a display, meta information corresponding to an image stored in a server;
receiving (413) a user selection of a wallpaper setting function corresponding to the meta information; and
based on the user selection of the wallpaper setting function:
downloading (419) the image from the server through a communication unit; and
setting (421) the downloaded image as a wallpaper according to the selected wallpaper setting function.

4. The method of claim 3, wherein the wallpaper setting function comprises a function of setting the downloaded image as a home screen of the mobile terminal, a function of setting the downloaded image as a lock screen of the mobile terminal, and a function of setting the downloaded image as the home screen and the lock screen.

5. A non-transitory computer readable medium storing programming instructions which, when executed by a processor, cause a mobile terminal to:
display, on a display, meta information corresponding to an image stored in a server;
receive a user selection of a wallpaper setting function corresponding to the meta information; and
based on the user selection of the wallpaper setting function:
download the image from the server through a communication unit; and
set the downloaded image as a wallpaper according to the selected wallpaper setting function.

6. The non-transitory computer-readable storage medium of claim 5, wherein the wallpaper setting function comprises a function of setting the downloaded image as a home screen of the mobile terminal, a function of setting the downloaded image as a lock screen of the mobile terminal, and a function of setting the downloaded image as the home screen and the lock screen.

## Patentansprüche

1. Mobiles Endgerät (101), umfassend:
eine Anzeige (250);
eine Kommunikationseinheit (220, 230), die dazu konfiguriert ist, mit einem Server (120) zu kommunizieren, auf dem ein Bild gespeichert ist;
einen Prozessor (200), der konfiguriert ist zum:
Steuern zum Anzeigen von Metainformationen, die dem auf dem Server (120) gespeicherten Bild entsprechen, auf der Anzeige (250);
Empfangen einer Benutzerauswahl einer Hintergrundbildeinstellungsfunktion entsprechend den Metainformationen; und
auf Grundlage der Benutzerauswahl der Hintergrundbildeinstellungsfunktion:
Herunterladen des Bildes von dem Server über die Kommunikationseinheit (220, 230); und
Einstellen des heruntergeladenen Bildes als ein Hintergrundbild gemäß der ausgewählten Hintergrundbildeinstellungsfunktion.

2. Mobiles Endgerät (101) nach Anspruch 1, wobei die Hintergrundbildeinstellungsfunktion eine Funktion zum Einstellen des heruntergeladenen Bildes als einen Startbildschirm des mobilen Endgeräts (101), eine Funktion zum Einstellen des heruntergeladenen Bildes als einen Sperrbildschirm des mobilen Endgeräts (101) und eine Funktion zum Einstellen des heruntergeladenen Bildes als Startbildschirm und Sperrbildschirm umfasst.

3. Verfahren zum Verarbeiten von Daten in einem mobilen Endgerät, wobei das Verfahren umfasst:
Anzeigen (411) von Metainformationen, die einem auf einem Server gespeicherten Bild entsprechen, auf einer Anzeige;
Empfangen (413) einer Benutzerauswahl einer Hintergrundbildeinstellungsfunktion entsprechend den Metainformationen; und
auf Grundlage der Benutzerauswahl der Hintergrundbildeinstellungsfunktion:
Herunterladen (419) des Bildes von dem Server über eine Kommunikationseinheit; und
Einstellen (421) des heruntergeladenen Bildes als ein Hintergrundbild gemäß der ausgewählten Hintergrundbildeinstellungsfunktion.

4. Verfahren nach Anspruch 3, wobei die Hintergrundbildeinstellungsfunktion eine Funktion zum Einstellen des heruntergeladenen Bildes als einen Startbildschirm des mobilen Endgeräts, eine Funktion zum Einstellen des heruntergeladenen Bildes als einen Sperrbildschirm des mobilen Endgeräts und eine Funktion zum Einstellen des heruntergeladenen Bildes als Startbildschirm und Sperrbildschirm umfasst.

5. Dauerhaftes computerlesbares Medium, auf dem Programmieranweisungen gespeichert sind, die bei Ausführung durch einen Prozessor ein mobiles Endgerät veranlassen zum:
Anzeigen von Metainformationen, die einem auf einem Server gespeicherten Bild entsprechen, auf einer Anzeige;
Empfangen einer Benutzerauswahl einer Hintergrundbildeinstellungsfunktion entsprechend den Metainformationen; und
auf Grundlage der Benutzerauswahl der Hintergrundbildeinstellungsfunktion:
Herunterladen des Bildes von dem Server über eine Kommunikationseinheit; und
Einstellen des heruntergeladenen Bildes als ein Hintergrundbild gemäß der ausgewählten Hintergrundbildeinstellungsfunktion.

6. Dauerhaftes computerlesbares Speichermedium nach Anspruch 5, wobei die Hintergrundbildeinstellungsfunktion eine Funktion zum Einstellen des heruntergeladenen Bildes als einen Startbildschirm des mobilen Endgeräts, eine Funktion zum Einstellen des heruntergeladenen Bildes als einen Sperrbildschirm des mobilen Endgeräts und eine Funktion zum Einstellen des heruntergeladenen Bilds als Startbildschirm und Sperrbildschirm umfasst.

## Revendications

1. Terminal mobile (101), comprenant :
un dispositif d'affichage (250) ;
une unité de communication (220, 230) configurée pour communiquer avec un serveur (120) stockant une image ;
un processeur (200) configuré pour :
commander d'afficher, sur le dispositif d'affichage (250), des méta-informations correspondant à l'image stockée dans le serveur (120) ;
recevoir un choix d'utilisateur d'une fonction de définition de fond d'écran correspondant aux méta-informations ; et
sur la base du choix d'utilisateur de la fonction de définition de fond d'écran :
télécharger l'image à partir du serveur par l'intermédiaire de l'unité de communication (220, 230) ; et
définir l'image téléchargée en tant que fond d'écran selon la fonction de définition de fond d'écran choisie.

2. Terminal mobile (101) selon la revendication 1, ladite fonction de définition de fond d'écran comprenant une fonction de définition de l'image téléchargée en tant qu'écran d'accueil du terminal mobile (101), une fonction de définition de l'image téléchargée en tant qu'écran de verrouillage du terminal mobile (101), et une fonction de définition de l'image téléchargée en tant qu'écran d'accueil et écran de verrouillage.

3. Procédé de traitement de données dans un terminal mobile, le procédé comprenant :
l'affichage (411), sur un dispositif d'affichage, des méta-informations correspondant à une image stockée dans un serveur ;
la réception (413) d'un choix d'utilisateur d'une fonction de définition de fond d'écran correspondant aux méta-informations ; et
sur la base du choix d'utilisateur de la fonction de définition de fond d'écran :
le téléchargement (419) de l'image à partir du serveur par l'intermédiaire d'une unité de communication ; et
le réglage (421) de l'image téléchargée en tant que fond d'écran selon la fonction de définition de fond d'écran choisie.

4. Procédé selon la revendication 3, ladite fonction de définition de fond d'écran comprenant une fonction de définition de l'image téléchargée en tant qu'écran d'accueil du terminal mobile, une fonction de définition de l'image téléchargée en tant qu'écran de verrouillage du terminal mobile, et une fonction de définition de l'image téléchargée en tant qu'écran d'accueil et écran de verrouillage.

5. Support non transitoire lisible par ordinateur stockant des instructions de programmation qui, lorsqu'elles sont exécutées par un processeur, amènent un terminal mobile à :
afficher, sur un dispositif d'affichage, des méta-informations correspondant à une image stockée dans un serveur ;
recevoir un choix d'utilisateur d'une fonction de définition de fond d'écran correspondant aux méta-informations ; et
sur la base du choix d'utilisateur de la fonction de définition de fond d'écran :
télécharger l'image à partir du serveur par l'intermédiaire d'une unité de communication ; et
définir l'image téléchargée en tant que fond d'écran selon la fonction de définition de fond d'écran choisie.

6. Support de stockage non transitoire lisible par ordinateur selon la revendication 5, ladite fonction de définition de fond d'écran comprenant une fonction de définition de l'image téléchargée en tant qu'écran d'accueil du terminal mobile, une fonction de définition de l'image téléchargée en tant qu'écran de verrouillage du terminal mobile, et une fonction de définition de l'image téléchargée en tant qu'écran d'accueil et écran de verrouillage.
